(19) Europäisches Patentamt
European Patent Office
Office européen des brevets

(11) **EP 4 321 896 A1**

(12) **EUROPÄISCHE PATENTANMELDUNG**

(43) Veröffentlichungstag:
**14.02.2024   Patentblatt 2024/07**

(21) Anmeldenummer: **23172708.2**

(22) Anmeldetag: **11.05.2023**

(51) Internationale Patentklassifikation (IPC):
**G01S 7/38** (2006.01)   **G01S 7/40** (2006.01)
**G09B 9/54** (2006.01)

(52) Gemeinsame Patentklassifikation (CPC):
**G01S 7/4095;** G01S 7/38

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **10.08.2022   DE 102022002902**

(71) Anmelder: **MBDA Deutschland GmbH**
**86529 Schrobenhausen (DE)**

(72) Erfinder:
• **FUCHS, Annika**
**86650 Wemding (DE)**
• **SCHWAB, Wolfgang**
**80637 München (DE)**

(74) Vertreter: **Isarpatent**
**Patent- und Rechtsanwälte Barth**
**Charles Hassa Peckmann & Partner mbB**
**Friedrichstrasse 31**
**80801 München (DE)**

(54) **REELLER STREUZENTRENMODULATOR MIT PHASE**

(57)   Offenbart ist ein System mit einen Analog-Digital-Wandler, A/D-Wandler, der zum Wandeln eines Hochfrequenzsignals, HF-Signal, in ein einziges digitales Eingangssignal konfiguriert ist; und mit einem Streuzentren-Modulator der zum Modulieren des digitalen Eingangssignals konfiguriert ist, wobei das Modulieren umfasst: Erzeugen einer Vielzahl von Replikas des digitalen Eingangssignals; Verzögern eines ersten Replikas der Vielzahl von Replikas mit einer ersten Verzögerung; Verzögern eines zweiten Replikas der Vielzahl von Replikas mit einer zweiten Verzögerung; Multiplizieren des verzögerten ersten Replikas mit einem Realteil eines Streukoeffizienten; Multiplizieren des verzögerten zweiten Replikas mit einem Imaginärteil des Streukoeffizienten; und Addieren der multiplizierten verzögerten ersten und zweiten Replikas zu einem digitalen Ausgangssignal.

Fig. 1

EP 4 321 896 A1

**Beschreibung**

TECHNISCHES GEBIET DER ERFINDUNG

Die Erfindung betrifft Systeme mit einem reellen Streuzentrenmodulator und Verfahren zum Betreiben solcher Systeme. Insbesondere betrifft die Erfindung einen Streuzentrenmodulator, der konfiguriert ist, um Imaginärteile von Streukoeffizienten orthogonal zu Realteilen der Streukoeffizienten auf dasselbe Signal zu modulieren.

TECHNISCHER HINTERGRUND

Die Streuung von hochfrequenter Strahlung kann durch Streuzentren beschrieben werden. Die Streuzentren sind dabei durch die Geometrie eines streuenden Zielobjektes bestimmt. Hurst M. P. und Mittra R. offenbaren in IEEE Transactions on Antennas and Propagation, vol. 35(8), pp. 986-988, August 1987 einen Weg zum Extrahieren von Lage und Gewichtungskoeffizienten von Streuzentren aus einem rückgestreuten Feld als Funktion der Frequenz der einfallenden Strahlung und erörtern ein Verfahren nach Gaspard de Prony (1755 - 1839) zur Analyse der Streuung an zwei- und dreidimensionalen Körpern.

In der modernen Radartechnik können, umgekehrt, realitätsnahe Radarziele in Radarsimulatoren und Radarzielgeneratoren durch Modulation eines Radarsignals mit einem Streuzentrenmodell gebildet werden. Jianxiong Z., Hongzhong Z., Zhiguang S. und Qiang F. offenbaren in IEEE Transactions on Antennas and Propagation, vol. 56(7), pp. 2051-2060, July 2008, ein Verfahren zum Extrahieren eines Streuzentrenmodells aus Breitbandmessungen bei dünn verteilten Winkeln in einem Winkelbereich. Das extrahierte Streuzentrenmodell enthält die stabilen Streuzentren des Zielobjekts und ist in einem großen Winkelbereich gültig. Es kann zur Rekonstruktion von Zielsignaturen und Radarbildern, wie beispielsweise einem Radarquerschnitt (radar cross section, RCS), unter jedem Winkel im Winkelbereich und bei jeder Frequenz in oder nahe dem ursprünglichen Messband verwendet werden.

Ein Streuzentrenmodell besteht in der Regel aus einer Vielzahl von komplexwertigen und frequenzabhängigen Streukoeffizienten mit einem Betrag und einer Phase. Das Radarsignal im Zeitbereich und dessen Spektrum im Frequenzbereich sind ebenfalls komplexwertig. Im Stand der Technik werden sie in IQ-Signale demoduliert und als solche verarbeitet, wobei I (Inphase) den Realteil und Q (Quadraturphase) den Imaginärteil des komplexwertigen Eingangssignals bezeichnen.

US 7,333,050 B2 offenbart Systeme und Verfahren zur Simulation von Zielsignalen und insbesondere zur Erweiterung einer komplexen Hochfrequenzsignatur mit einem reellen Streuzentrenmodell. Ein von einem Radarsystem oder einem Waffensystem einfallendes Radarsignal wird von einer Host-Plattform, wie beispielsweise einer Drohne, empfangen, in IQ-Signale demoduliert, und anschließend moduliert, um ein moduliertes Radarsignal zu erzeugen. Das modulierte Radarsignal zeigt eine Radarreflexion eines simulierten Zielobjekts an und kann an das Waffensystem oder das Radarsystem zurückgesendet werden, beispielsweise um dieses zu trainieren oder diesem ein falsches Bild vom Zielobjekt zu vermitteln.

Die Modulation des Radarsignals kann im Zeitbereich durch eine komplexwertige Faltung des Radarsignals mit den Streukoeffizienten erfolgen. Durch Transformation des Radarsignals in den Frequenzbereich kann die Modulation auch im Frequenzbereich durch eine komplexwertige Multiplikation des Spektrums mit den Streukoeffizienten und anschließende Rücktransformation in den Zeitbereich erfolgen.

Wegen hoher Abtastraten und Bandbreiten von modernen Radarsignalen und der Komplexität von Streuzentrenmodellen führt die Verwendung von IQ-Signalen zu hohen Anforderungen an Hardware und Software, um die Modulation in Echtzeit zu gewährleisten.

Thingsrud Ø. offenbart in SET Symposium on Target Identification and Recognition Using RF Systems, Bd. RTO-MP-SET080-P7, pp 1-12, Oktober 2004, einen komplexwertigen Modulator, der digitale Signalverarbeitung im Frequenzbereich zum Erzeugen von falschen Zielobjekten verwendet. Offenbart ist eine parallele Realisierung einer komplexwertigen Faltung im Zeitbereich, bei der eine Anzahl von Replika eines komplexwertigen Radarsignals, jedes mit einer individuellen Modulation in der Zeit gefolgt von einer Multiplikation mit einer komplexwertigen Zahl, zu einem modulierten Radarsignal addiert werden. Um die Komplexität der erforderlichen Hardware zu verringern wird, alternativ zur komplexwertigen Faltung im Zeitbereich, ein sogenanntes "schnelles Faltungsverfahren" offenbart, bei dem die Modulation im Frequenzraum in Form einer komplexwertigen Multiplikation durchgeführt wird, unter Verwendung einer schnellen FourierTransformation und einer entsprechenden Rücktransformation in den Zeitbereich.

Radarsignale können jedoch nicht immer in komplexwertiger Form als IQ-Signal verarbeitet werden, beispielsweise wegen eines Mangels an der Verfügbarkeit von geeigneten Bauteilen wie IQ-Demodulatoren, IQ-Modulatoren, einer begrenzten Anzahl von Signalkanälen oder aus anderen Gründen, welche die Verarbeitungskapazität eines Systems begrenzen.

Erfolgt eine Modulation nur unter Verwendung eines reellwertigen Radarsignals und nur unter Verwendung des Absolutbetrages der Streukoeffizienten, so geht der Phasenbeitrag der Streukoeffizienten verloren. Bei einer Auswertung eines so erzeugten Radarsignals in einem Radarempfänger oder einer Vorrichtung, die eine elektronische Unterstützungsmaßnahme (electronic support measure, ESM) bereitstellt, zeigen sich im Vergleich zur komplexwertigen Modulation andere Eigenschaften für die Signalfluktuation oder die Phase der Streukoeffizienten. Eine zurückgesendete Signatur eines Zielobjektes kann somit unglaubwürdig werden, oder eine Simulation eines Zielobjektes zu Übungszwecken kann eine verringerte Qualität aufweisen und zum Trainieren von beispielsweise einem Radarsystem nicht mehr geeignet sein.

## ZUSAMMENFASSUNG DER ERFINDUNG

Eine der Aufgaben der Erfindung besteht darin, die Komplexität eines Streuzentrenmodulators, welcher zur Stimulation von Radarsimulatoren und Radarsystemen Anwendung findet, zu verringern. Insbesondere soll die Echtzeitfähigkeit mit realisierbarem Hardwareaufwand gewährleistet sein.

Gemäß einem Aspekt der Erfindung erfolgt eine Modulation rein reell, das heißt, ein einziges reellwertiges hochfrequentes Signal wird mit dem Real- und dem Imaginärteil der Streukoeffizienten moduliert, so dass die Phase der Streukoeffizienten in die Modulation miteingeht, und somit die Zielsignaleigenschaften ohne eine komplexwertige Modulation mit Inphase- und Quadraturphase-Signalen erhalten bleiben.

Gemäß einem Aspekt der Erfindung umfasst ein System einen Analog-Digital-Wandler, A/D-Wandler, der zum Wandeln eines hochfrequenten Signals in ein einziges digitales Eingangssignal konfiguriert ist; und einen Streuzentren-Modulator, SZM, der zum Modulieren des digitalen Eingangssignals konfiguriert ist, wobei das Modulieren umfasst: Erzeugen einer Vielzahl von Replikas des digitalen Eingangssignals; Verzögern eines ersten Replikas der Vielzahl von Replikas mit einer ersten Verzögerung; Verzögern eines zweiten Replikas der Vielzahl von Replikas mit einer zweiten Verzögerung; Multiplizieren des verzögerten ersten Replikas mit einem Realteil eines Streukoeffizienten; Multiplizieren des verzögerten zweiten Replikas mit einem Imaginärteil des Streukoeffizienten; und Addieren der multiplizierten verzögerten ersten und zweiten Replikas zu einem digitalen Ausgangssignal.

Weitere vorteilhafte Ausgestaltungen und Weiterbildungen ergeben sich aus den Unteransprüchen sowie aus der Beschreibung unter Bezugnahme auf die Figuren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

## KURZE INHALTSANGABE DER FIGUREN

Die vorliegende Erfindung wird nachfolgend anhand der in den schematischen Figuren angegebenen Ausführungsbeispiele näher erläutert. Es zeigen dabei:

Fig. 1    einen schematischen Aufbau eines Radarzielgenerators;

Fig. 2    einen schematischen Aufbau eines Streuzentren-Modulators mit einer positiven Verschiebung um $\tau_0$;

Fig. 3    einen schematischen Aufbau eines Streuzentren-Modulators mit einer negativen Verschiebung um $\tau_0$; und

Fig. 4    einen schematischen Aufbau eines Streuzentren-Modulators mit einer geordneten Verschiebung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

## BESCHREIBUNG VON AUSFÜHRUNGSBEISPIELEN

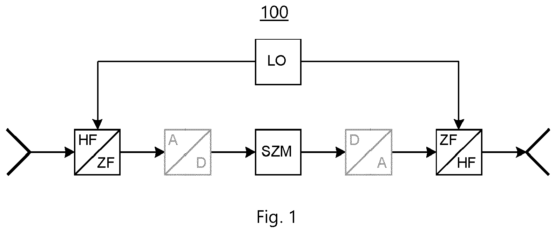

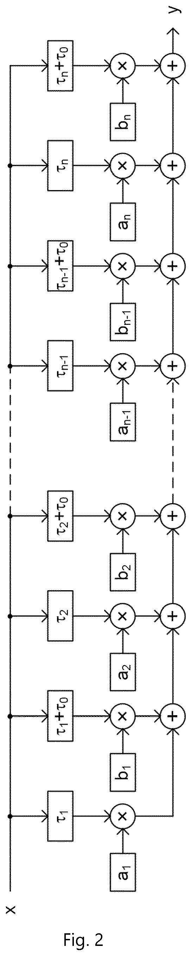

Fig. 1 zeigt einen schematischen Aufbau eines Radarzielgenerators 100. Der Radarzielgenerator 100 umfasst einen Streuzentren-Modulator (SZM), der zum Modulieren eines Hochfrequenzsignals (HF-Signal) oder eines Signals auf einer Zwischenfrequenz (ZF-Signal) gemäß einem Streuzentrenmodell konfiguriert ist. Beispielhafte Ausführungsformen des erfindungsgemäßen SZM werden nachfolgend mit Bezug zu den Figuren 2 bis 4 beschrieben. Der SZM kann mit einem Speicher zum Speichern von Streukoeffizienten gekoppelt sein (nicht gezeigt). Der Speicher kann zum Speichern von einem oder von mehreren Streuzentrenmodellen konfiguriert sein.

Ein SZM kann beispielsweise in einem Zielgenerator für eine Testeinrichtung und/oder eine Messeinrichtung, in einem Radar-Ziel-Transponder bzw. Repeater eingesetzt werden. Der SZM kann der Radarzielsignaturerzeugung im elektromagnetischen Spektrum dienen.

Der Radarzielgenerator 100 kann eine Antenne zum Empfangen des HF-Signals umfassen. Das HF-Signal kann auch von einem Generator erzeugt werden. Der Generator kann zusätzlich oder alternativ zum Erzeugen einer Zwischenfrequenz (ZF) konfiguriert sein. Der Generator kann direkt oder indirekt mit dem Radarzielgenerator 100 gekoppelt sein. Der Radarzielgenerator 100 kann zusätzlich oder alternativ eine Antenne zum Senden eines HF-Signals umfassen. Die Antennen zum Senden und zum Empfangen eines HF-Signals können identisch sein.

Der Radarzielgenerator 100 kann einen (analogen) Downconverter (HF/ZF) zum Umsetzen des HF-Signals auf die ZF umfassen.

Der Radarzielgenerator 100 kann einen Analog-Digital-Wandler (A/D-Wandler) zum Wandeln des HF-Signal und/oder zum Wandeln des umgesetzten HF-Signal auf der Zwischenfrequenz (ZF-Signal) in ein digitales Signal umfassen. Das digitale Signal kann aus einem einzigen Signal bestehen. Insbesondere kann das digitale Signal nicht aus einem Inphase-Signal (I-Signal) und einem Quadraturphase-Signal (Q-Signal) bestehen. Der A/D-Wandler kann direkt oder indirekt mit der Antenne zum Empfangen des HF-Signals und/oder dem Generator gekoppelt sein. Der A/D-Wandler kann auch direkt oder indirekt mit dem SZM gekoppelt sein.

Der Radarzielgenerator 100 kann ferner einen Digital-Analog-Wandler (D/A-Wandler) zum Wandeln des modulierten HF-Signals oder des modulierten ZF-Signals in ein analoges moduliertes HF-Signal oder ein analoges moduliertes ZF-Signal umfassen. Der D/A-Wandler kann direkt oder indirekt mit dem SZM gekoppelt sein. Der D/A-Wandler kann direkt oder indirekt mit der Antenne zum Senden des analogen modulierten HF-Signals gekoppelt sein. Der D/A-Wandler kann auch direkt oder indirekt mit einem (analogen) Upconverter (ZF/HF) zum Umsetzen des analogen modulierten ZF-Signals in ein analoges moduliertes HF-Signal gekoppelt sein.

Der Radarzielgenerator 100 kann den (analogen) Upconverter (ZF/HF) umfassen. Der (analoge) Upconverter kann direkt oder indirekt mit der Antenne zum Senden des (umgesetzten) analogen modulierten HF-Signals gekoppelt sein.

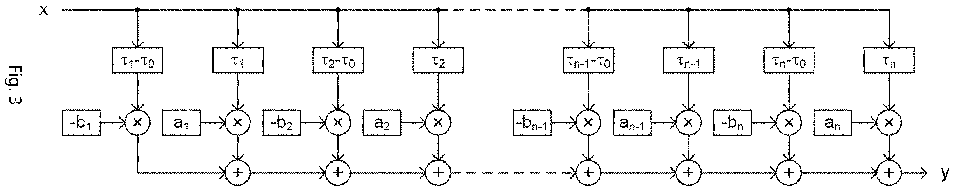

Fig. 2 zeigt einen möglichen Aufbau des SZM gemäß Fig. 1. Das digitale Eingangssignal $x$ des SZM wird in einer Vielzahl $2n$ von parallelen Signalpfaden, bzw. Replikas des Eingangssignals $x$, jeweils um die Zeitdauer $\tau_i$ oder $\tau_i + \tau_0$ mit $i \in [1, n]$ sowie $1 \leq n \in \mathbb{N}$ entsprechend einer Vielzahl $n$ von komplexwertigen Streukoeffizienten $c_i = a_i - jb_i$ verzögert, wobei $j = \sqrt{-1}$. Die Vorzeichen der Koeffizenten in den Fig. 2 und Fig. 3 beziehen sich auf eine negative Drehrichtung des Streuzentrums, dadurch ist die Formel $a_i - jb_i$. Das digitale Eingangssignal wird aus dem HF erzeugt, beispielsweise durch direkte A/D Wandlung des HF - Signals oder durch analoge Wandlung des HF-Signal (heterodyn oder homodyn) in ein ZF-Signal (analog) gefolgt von einer digitalen Wandlung. Das reellwertige Signal (HF oder ZF Signal) wird über die Phase, die Frequenz und die Amplitude des Signals definiert.

In der beispielhaften Ausführungsform von Fig. 2 wird jeweils der Realteil $a_i$ des Streukoeffizienten $c_i$ mit dem um $\tau_i$ verzögerten Eingangssignal $x$ auf einem der parallelen Signalpfade multipliziert. Der Imaginärteil $b_i$ des Streukoeffizienten $c_i$ wird mit einem zusätzlich um $\tau_0$, also um $\tau_i + \tau_0$ verzögerten Eingangssignal $x$ auf einem Signalpfad multipliziert. Die Signalpfade können, müssen aber nicht benachbart sein. Die Reihenfolge der Signalpfade kann beliebig gewählt werden. Die zusätzliche Verzögerung kann beispielsweise durch die Beziehung $\tau_0 = 90/360 \times 1/f = 1/(4 \times f)$ mit der Mittenfrequenz $f$ des Eingangssignals $x$ verknüpft sein, um die in den reellen Streukoeffizienten $a_i$ und $b_i$ enthaltene Information im Zeitbereich orthogonal auf das Eingangssignal $x$ zu modulieren. Die zusätzlichen Verzögerung ist vorteilhaft, weil dadurch das Eingangssignal $x$ in orthogonaler Form vorliegt. Die Mittenfrequenz $f$ entspricht der der Bandmitte, in welcher die Signalverarbeitung stattfindet. Die Zeitdauer $\tau_i$ ist über das SZM definiert und ergibt sich beispielsweise aus der Beziehung $\tau_i = p_i/c$ wobei $c$ die Lichtgeschwindigkeit im Vakuum und $p_i$ die Position des Streuzentrums $i$ bezeichnen. Beispielhafte Werte von $\tau_0$ und $\tau_i$ sind 25 ns beziehungsweise 10 ns.

Nach der Multiplikation auf den parallelen Signalpfaden werden die mit den Streukoeffizienten modulierten Signale zu einem digitalen Ausgangssignal $y$ addiert.

Fig. 3 zeigt einen weiteren möglichen Aufbau des SZM gemäß Fig. 1. Der Aufbau gemäß Fig. 3 unterscheidet sich vom Aufbau gemäß Fig. 2 dadurch, dass die zusätzliche Verschiebung $\tau_0$, von der Verzögerung $\tau_i$ des Eingangssignals $x$ auf einem der parallelen Signalpfade subtrahiert wird und der negative Imaginärteil $b_i$ des Streukoeffizienten $c_i$ mit dem auf einem Signalpfad multipliziert wird. Die Signalpfade müssen nicht benachbart sein. Die Reihenfolge der Signalpfade kann beliebig sein. Im Übrigen ist der Aufbau gemäß Fig. 3 mit dem Aufbau gemäß Fig. 2 identisch.

Das Ausgangssignal *y* gemäß den in der Fig. 2 und Fig. 3 gezeigten Ausführungsformen kann wie folgt zusammengefasst werden:

$$y(t) = \sum_{i=1}^{n} x(t - \tau_i)a_i \pm x\big(t - (\tau_i \mp \tau_0)\big)b_i \ .$$

Das obere Vorzeichen bezieht sich auf die Ausführungsform der Fig. 2. Das untere Vorzeichen bezieht sich auf die Ausführungsform der Fig. 3. Modifikationen an den in Fig. 2 und Fig. 3 gezeigten Ausführungsformen sind ebenfalls möglich. Beispielsweise können Streukoeffizienten $c_i$ eines Streuzentrenmodells vernachlässigt werden. Eine weitere mögliche Modifikation (nicht gezeigt) ist, dass die Signalpfade zusammengeführt werden und zuerst eine Verzögerung um $\tau_i$ erfolgt und nach einer Aufspaltung in zwei Signalpfade einer der beiden um $\tau_0$ verzögert wird.

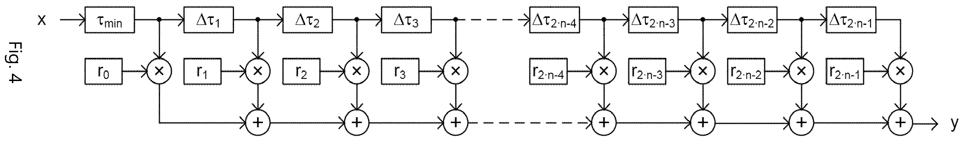

Neben der obigen Implementierung ist es auch möglich eine Kaskadenstruktur aufzubauen, welche in Fig 4 dargestellt ist. Diese Implementierung ermöglicht ein Sortieren der resultierenden Zeitverzögerungen, da es je nach Position der Streuzentren und der Mittenfrequenz des Signals dazu kommen kann, dass $\tau_i + \tau_0 > \tau_{i+1}$. Die Variablen $r_0$ bis $r_{2n-1}$ entsprechen dann den nach der Sortierung resultierenden Gewichten $a_1$ bis $a_n$ bzw. $b_1$ bis $b_n$. Die kleinste Verzögerung wird durch $\tau_{min}$ dargestellt. Die kleinste Verzögerung beträgt beispielsweise = 10ns. Die Differenzenverzögerung $\Delta\tau_k$ ergibt sich aus der Differenz von $\tau_{k+1} - \tau_k$ der nach ihrer Dauer sortieren Verzögerungen $\tau_k$ mit dem Sortierungsindex k, wobei die Verzögerungen $\tau_k$ ein Element der vereinigten Mengen der Streuzentrenverzögerungen $\tau_i$ oder der Streuzentrenverzögerungen $\tau_i + \tau_0$ ist. Beispielsweise können die verzögerten Eingangssignale *x* in einer Folge von Replikas mit zunehmender Verzögerung geordnet werden.

Das Ausgangssignal *y* gemäß der in der Fig. 4 gezeigten Ausführungsform kann wie folgt zusammengefasst werden:

$$y(t) = \sum_{l=0}^{2n-1} x\left(t - \left(\tau_{min} + \sum_{k=1}^{l\geq 1} \Delta\tau_k\right)\right) r_l \ .$$

Die reellwertige Modulation kann mit erhöhten Anforderungen an die Hardware auch im Frequenzbereich erfolgen, mit einer orthogonalen Verteilung der Streukoeffizienten im Frequenzbereich. Diese Option kann jedoch nachteilig sein, weil sie zu einer großen Laufzeitverzögerung aufgrund einer Fast-FourierTransformation führen kann.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Vielzahl derartig beschriebener Merkmale und Komponenten nicht grundsätzlich ausschließen.

**Patentansprüche**

1. System (100), umfassend:

einen Analog-Digital-Wandler, A/D-Wandler, der zum Wandeln eines Hochfrequenzsignals, HF-Signal, in ein einziges digitales Eingangssignal (*x*) konfiguriert ist; und
einen Streuzentren-Modulator, SZM, der zum Modulieren des digitalen Eingangssignals (*x*) konfiguriert ist, wobei das Modulieren umfasst:

Erzeugen einer Vielzahl (2*n*) von Replikas des digitalen Eingangssignals (*x*);
Verzögern eines ersten Replikas der Vielzahl (2*n*) von Replikas mit einer ersten Verzögerung ($\tau_i$);
Verzögern eines zweiten Replikas der Vielzahl (2*n*) von Replikas mit einer zweiten Verzögerung ($\tau_i \mp \tau_0$);
Multiplizieren des verzögerten ersten Replikas mit einem Realteil ($a_i$) eines Streukoeffizienten ($c_i = a_i - jb_i$);
Multiplizieren des verzögerten zweiten Replikas mit einem Imaginärteil ($\mp b_i$) des Streukoeffizienten ($c_i = a_i - jb_i$); und
Addieren der multiplizierten verzögerten ersten und zweiten Replikas zu einem digitalen Ausgangssignal (*y*).

**2.** System (100) nach Anspruch 1, wobei das Modulieren ferner umfasst:
Sortieren der verzögerten ersten und zweiten Replikas in einer Folge von Replikas mit zunehmender Verzögerung.

**3.** System (100) nach Anspruch 1 oder 2, ferner umfassend einen Downconverter (HF/ZF), der zum Umsetzen des HF-Signals auf eine Zwischenfrequenz, ZF, konfiguriert ist; und wobei der A/D-Wandler ferner zum Wandeln des umgesetzten HF-Signals, oder umgesetzten ZF-Signal, in das einzige digitale Eingangssignal (*x*) konfiguriert ist.

**4.** System (100) nach einem der Ansprüche 1 bis 3, ferner umfassend eine Antenne, die zum Empfangen des HF-Signals konfiguriert ist.

**5.** System (100) nach einem der Ansprüche 1 bis 4, ferner umfassend einen Digital-Analog-Wandler, D/A-Wandler, der zum Wandeln des digitalen Ausgangssignals (*y*) in ein analoges HF-Signal oder ein analoges ZF-Signal konfiguriert ist.

**6.** System (100) nach Anspruch 3, ferner umfassend einen Upconverter (ZF/HF) der zum Umsetzen des ZF-Signals auf ein HF-Signal konfiguriert ist.

**7.** System (100) nach einem der Ansprüche 1 bis 6, ferner umfassend eine Antenne, die zum Senden eines HF-Signals konfiguriert ist.

**8.** System (100) nach einem der Ansprüche 1 bis 7, ferner umfassend einen Speicher, der zum Speichern von einem oder von mehreren Streuzentrenmodellen konfiguriert ist und mit dem SZM gekoppelt ist.

**9.** Verfahren zum Betreiben eines Systems nach einem der Ansprüche 1 bis 8, wobei das Verfahren umfasst:

Erzeugen einer Vielzahl (2*n*) von Replikas des digitalen Eingangssignals (x);
Verzögern eines ersten Replikas der Vielzahl (2*n*) von Replikas mit einer ersten Verzögerung ($\tau_i$);
Verzögern eines zweiten Replikas der Vielzahl (2*n*) von Replikas mit einer zweiten Verzögerung ($\tau_i + \tau_0$);
Multiplizieren des verzögerten ersten Replikas mit einem Realteil ($a_i$) eines Streukoeffizienten ($c_i = a_i - jb_i$);
Multiplizieren des verzögerten zweiten Replikas mit einem Imaginärteil ($\mp b_i$) des Streukoeffizienten ($c_i = a_i - jb_i$); und
Addieren der multiplizierten verzögerten ersten und zweiten Replikas zu einem digitalen Ausgangssignal (*y*).

**10.** Verfahren nach Anspruch 9, wobei das Verfahren ferner umfasst:
Sortieren der verzögerten ersten und zweiten Replikas in einer Folge von Replikas mit zunehmender Verzögerung.

100

Fig. 1

Fig. 2

Fig. 3

Fig. 4

$x$ → $\tau_{min}$ → $\Delta\tau_1$ → $\Delta\tau_2$ → $\Delta\tau_3$ → - - - → $\Delta\tau_{2 \cdot n-4}$ → $\Delta\tau_{2 \cdot n-3}$ → $\Delta\tau_{2 \cdot n-2}$ → $\Delta\tau_{2 \cdot n-1}$

$r_0$, $r_1$, $r_2$, $r_3$, $r_{2 \cdot n-4}$, $r_{2 \cdot n-3}$, $r_{2 \cdot n-2}$, $r_{2 \cdot n-1}$

→ $y$

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 6 637395 B2 (MITSUBISHI HEAVY IND LTD) 29. Januar 2020 (2020-01-29) * Absatz [0057] – Absatz [0066]; Abbildung 6 * * Absatz [0020] – Absatz [0032] * ----- | 1-10 | INV. G01S7/38 G01S7/40 G09B9/54 |
| X | US 4 613 863 A (MITCHELL RICHARD L [US]) 23. September 1986 (1986-09-23) * Spalte 19, Zeile 1 – Zeile 22; Abbildung 6 * * Spalte 10, Zeile 40 – Spalte 11, Zeile 7; Abbildung 2 * ----- | 1-10 | |
| A | HAO HUANG ET AL: "Hardware-in-the-loop simulation technology of wide-band radar targets based on scattering center model", CHINESE JOURNAL OF AERONAUTICS, Bd. 28, Nr. 5, 1. Oktober 2015 (2015-10-01), Seiten 1476-1484, XP055325574, NL ISSN: 1000-9361, DOI: 10.1016/j.cja.2015.07.006 * Absatz [002.]; Abbildung 4 * ----- | 1-10 | |
| A,D | US 7 333 050 B2 (BOEING CO [US]) 19. Februar 2008 (2008-02-19) * Spalte 15, Zeile 22 – Zeile 37; Abbildung 21 * ----- | 1-10 | RECHERCHIERTE SACHGEBIETE (IPC) G01S G09B |

-/--

Der vorliegende Recherchenbericht wurde für alle Patentansprüche erstellt

| Recherchenort | Abschlußdatum der Recherche | Prüfer |
|---|---|---|
| München | 20. Dezember 2023 | Kaleve, Abraham |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

**EP 23 17 2708**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ISPIR MEHMET ET AL: "Real-time multiple velocity false target generation in digital radio frequency memory", 2016 IEEE RADAR CONFERENCE (RADARCONF), IEEE, 2. Mai 2016 (2016-05-02), Seiten 1-6, XP032909141, DOI: 10.1109/RADAR.2016.7485310 [gefunden am 2016-06-03] * Absatz [00I.]; Abbildung 1 * * Absatz [III.]; Abbildungen 8,9 * ----- | 1-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| **München** | **20. Dezember 2023** | **Kaleve, Abraham** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

**Seite 2 von 2**

# EP 4 321 896 A1

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2023

| Im Recherchenbericht angeführtes Patentdokument | Datum der Veröffentlichung | Mitglied(er) der Patentfamilie | Datum der Veröffentlichung |
|---|---|---|---|
| JP 6637395 B2 | 29-01-2020 | JP 6637395 B2<br>JP 2018031655 A | 29-01-2020<br>01-03-2018 |
| US 4613863 A | 23-09-1986 | KEINE | |
| US 7333050 B2 | 19-02-2008 | GB 2423880 A<br>US 2008018525 A1 | 06-09-2006<br>24-01-2008 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7333050 B2

**In der Beschreibung aufgeführte Nicht-Patentliteratur**

- **HURST M. P. ; MITTRA R.** *IEEE Transactions on Antennas and Propagation,* August 1987, vol. 35 (8), 986-988

- **JIANXIONG Z. ; HONGZHONG Z. ; ZHIGUANG S. ; QIANG F.** *IEEE Transactions on Antennas and Propagation,* Juli 2008, vol. 56 (7), 2051-2060